# EUROPÄISCHE PATENTSCHRIFT

(11) **EP 2 965 892 B1**
(45) Veröffentlichungstag und Bekanntmachung des Hinweises auf die Patenterteilung: **11.01.2017**
(21) Anmeldenummer: 15001607.9
(22) Anmeldetag: 29.05.2015
(51) Int. Cl.: B29C 70/46, B29C 70/54, B29C 43/34

(54) **VORRICHTUNG UND VERFAHREN ZUM INFILTRIEREN VON FASERMATERIAL MIT HARZ ZUR HERSTELLUNG EINES FASERVERBUNDBAUTEILS**
DEVICE AND METHOD FOR INFILTRATING FIBROUS MATERIAL UTILIZING RESIN FOR THE PRODUCTION OF A FIBRE COMPOSITE COMPONENT
DISPOSITIF ET PROCÉDÉ D'INFILTRATION DE MATIÈRE FIBREUSE ET DE RÉSINE POUR LA FABRICATION D'UN COMPOSANT COMPOSITE EN FIBRES

(30) Priorität: 03.06.2014 DE 102014007869
(43) Veröffentlichungstag der Anmeldung: 13.01.2016
(73) Patentinhaber: Airbus Defence and Space GmbH, 85521 Ottobrunn (DE)
(72) Erfinder: Weimer, Christian, 81537 München (DE); Filsinger, Jürgen, 85635 Höhenkirchen-Siegertsbrunn (DE)
(74) Vertreter: Isarpatent

(56) Entgegenhaltungen:
- DE-B4- 10 157 655
- DE-C1- 10 007 373
- US-A- 5 316 462
- DATABASE WPI Week 200745 Thomson Scientific, London, GB; AN 2007-463643 XP002751527, -& JP 2007 130801 A (FUJI HEAVY IND LTD) 31. Mai 2007 (2007-05-31)

## Beschreibung

Die vorliegende Erfindung betrifft die Herstellung von Faserverbundbauteilen und insbesondere eine Vorrichtung nach dem Oberbegriff des Anspruchs 1 sowie ein Verfahren nach dem Oberbegriff des Anspruchs 6. Ferner betrifft die Erfindung eine Verwendung einer derartigen Vorrichtung bzw. eines derartigen Verfahrens. Ganz allgemein ist es für eine hohe Qualität von Faserverbundbauteilen wichtig, dass beim Harzinfiltrationsvorgang das Harz das Fasermaterial möglichst gleichmäßig durchtränkt. Zu diesem Zweck ist aus dem Stand der Technik der Einsatz von so genannten "Fließhilfen" bekannt. Üblicherweise handelt es sich bei derartigen zusammen mit dem zu infiltrierenden Fasermaterial in einen Infusionsaufbau eingebrachte Fließhilfen um Strukturen zum Fördern einer raschen und/oder besonders gleichmäßigen Harzverteilung im Fasermaterial bzw. entlang wenigstens einer Seite, z. B. Flachseite, des Fasermaterials. Die Idee dabei ist, dass das zugeführte Harz sich aufgrund des niedrigen Fließwiderstandes der Fließhilfe (z. B. textile grobmaschige Matten, gitterartige Geflechte etc.) besonders rasch in der Fließhilfe verteilt, so dass das in der Fließhilfe verteilte Harz sodann "auf kurzem Weg" und über die entsprechenden Grenzflächen bzw. Oberflächen des Fasermaterials in das Fasermaterial hinein vordringen kann.

Eine gattungsgemäße Vorrichtung und ein gattungsgemäßes Verfahren sind aus der DE 101 57 655 B4 bekannt.

Der DE 100 07 373 C1, der als nächstliegender Stand der Technik angesehen wird, offenbart eine Vorrichtung gemäß dem Oberbegriff des Anspruchs 1 und ein Verfahren gemäß dem Oberbegriff des Anspruchs 6.

Bei der bekannten Vorrichtung wird zum Infiltrieren einer Preform (Fasermaterial) mit Harz ein Formwerkzeug verwendet, bei welchem eine Kavität zur Aufnahme der Preform von mindestens zwei gegeneinander bewegbaren, jedoch gegeneinander abgedichteten Werkzeugteilen umschlossen wird. Das Formwerkzeug ist derart ausgebildet, dass in einer ersten Werkzeugstellung innerhalb der Kavität Raum zur Aufnahme der Preform und "zusätzlicher Raum" zur Aufnahme von zugeführtem Harz bereitstellbar ist und die Kavität durch eine Verstellung des Formwerkzeuges von der ersten Werkzeugstellung in eine zweite Werkzeugstellung verkleinerbar ist, um nach der Harzinfiltration das im zusätzlichen Raum der Kavität verbleibende Harz keilförmig aus diesem zusätzlichen Raum heraus und auch noch in die Preform hinein zu drücken.

Vorteilhaft wird damit eine wirtschaftliche Herstellung von Faserverbundbauteilen ohne Abfall ("überschüssiges" Harz) ermöglicht.

Bei diesem Stand der Technik wird anstatt einer Fließhilfe ein "zusätzlicher Raum" während des Infiltrationsvorganges im Formwerkzeug (Spalte oberhalb und unterhalb des zu imprägnierenden Fasermaterials) vorgesehen.

Nachteilig ist bei diesem Stand der Technik jedoch, dass insbesondere bei vergleichsweise hoher Harzzufuhrgeschwindigkeit die Gefahr besteht, dass es während des Infiltrationsvorganges, insbesondere beim Befüllen des "zusätzlichen Raumes" in der Werkzeugkavität, zu unerwünschten Verformungen bzw. Faserverschiebungen am angrenzenden Fasermaterial kommt.

Ausgehend von diesem Stand der Technik ist es eine Aufgabe der vorliegenden Erfindung, den vorgenannten Nachteil zu vermeiden und insbesondere eine Vorrichtung und ein Verfahren zur Infiltrierung von Fasermaterial mit Harz bereitzustellen, bei welchen eine vergleichsweise rasche Imprägnierung des Fasermaterials mit vergleichsweise geringer Gefahr von Faserverschiebungen ermöglicht ist.

Die erfindungsgemäße Vorrichtung gemäß Anspruch 1 ist dadurch gekennzeichnet, dass in der Kavität eine Fließhilfe vorgesehen ist, umfassend zumindest eine erste Lage und eine zweite Lage, die in einem Randbereich der Fließhilfe miteinander verbunden sind, um einen Fließraum zu umschließen, wobei die erste Lage harzdicht ist, wohingegen die zweite Lage einen Auslass zum Ausleiten von Harz aus dem Fließraum heraus in das Fasermaterial hinein bereitstellt, und wobei der Fließraum der Fließhilfe mit Harz gefüllt ist und/oder die Fließhilfe einen Einlass zur Zufuhr von Harz in den Fließraum aufweist.

Das erfindungsgemäße Verfharen gemäß Anspruch 6 ist dementsprechend dadurch gekennzeichnet, dass es ferner folgende Schritte umfasst:
- Anordnen einer Fließhilfe in dem zusätzlichen Raum der Kavität, wobei die Fließhilfe zumindest eine erste Lage und eine zweite Lage umfasst, die in einem Randbereich der Fließhilfe miteinander verbunden sind, um einen Fließraum der Fließhilfe zu umschließen, wobei die erste Lage harzdicht ist, wohingegen die zweite Lage einen Auslass zum Ausleiten von Harz aus dem Fließraum heraus in das Fasermaterial hinein bereitstellt, und wobei der Fließraum der Fließhilfe mit Harz gefüllt ist und/oder die Fließhilfe einen Einlass zur Zufuhr von Harz in den Fließraum aufweist, und
- gegebenenfalls Zuführen von Harz in den Fließraum der Fließhilfe, so dass bei der Verstellung des Formwerkzeuges von der ersten Werkzeugstellung in die zweite Werkzeugstellung Harz aus dem Fließraum der Fließhilfe heraus in das Fasermaterial hinein gedrückt wird.

Die Grundidee der Erfindung besteht somit darin, beim Einsatz einer gattungsgemäßen Vorrichtung bzw. eines gattungsgemäßen Verfahrens, bei welchem "eigentlich" bereits die Konstruktion der Vorrichtung bzw. deren Betriebsweise eine so genannte "Fließhilfe" entbehrlich macht (vgl. hierzu z. B. die vorgenannte DE 101 57 655 B4, Absätze 0002, 0003 und 0013), trotzdem eine solche Fließhilfe einzusetzen, um damit beim Infiltrationsvorgang jedoch nicht eine verbesserte Harzverteilung zu erzielen, sondern vielmehr, gewissermaßen "zweckentfremdet" das Eindringen des Harzes in das Fasermaterial vorteilhaft besser kontrollieren zu können.

Erfindungsgemäß werden unerwünschte Faserverschiebungen durch den Einsatz der Fließhilfe vermieden, die in dem "zusätzlichen Raum" innerhalb der Kavität des Formwerkzeuges angeordnet wird und einen (z. B. dem jeweiligen Anwendungsfall optimal anpassbaren) "Auslass" zum Ausleiten von Harz aus der Fließhilfe heraus in das Fasermaterial hinein bereitstellt.

Da das Harz diesen Auslass passieren muss, um in das Fasermaterial hineinzugelangen, kann durch entsprechende Ausgestaltung des Auslasses insbesondere z. B. sichergestellt werden, dass das dem zusätzlichen Raum bzw. der Fließhilfe in diesem zusätzlichen Raum zugeführte Harz nicht völlig ungehindert sogleich in das Fasermaterial eindringen und (insbesondere bei hohen Injektionsdrücken bzw. Volumenströmen) dort Faserverschiebungen bewirkt.

Die im Rahmen der Erfindung von ihrer Form und Größe her prinzipiell frei dimensionierbare Fließhilfe besitzt bevorzugt eine flächig ausgedehnt platten- oder kissenartige Formgestaltung. Insbesondere in diesem Fall kann vorgesehen sein, dass die Fließhilfe in der Vorrichtung bzw. bei dem Verfahren mit einer von der zweiten Lage gebildeten Flachseite an einer Flachseite eines insgesamt flächig ausgedehnten Fasermaterials anliegend angeordnet ist/wird.

Die "erste Lage" der Fließhilfe ist harzdicht. Davon ist jede Lage umfasst, durch welche das Harz auch bei den in der Verwendungssituation zweckdienlicher Weise einzustellenden Temperatur- und Druckverhältnissen nicht hindurch treten kann.

Der Begriff "Harz" soll im Sinne der Erfindung ein Material bezeichnen, welches dazu geeignet ist, mit einem Fasermaterial ein Faserverbundbauteil zu bilden. Dieses Material (Matrixmaterial) kann dabei z. B. auch bereits einen Härter enthalten (Mehrkomponentenharzsystem). Harz im engeren Sinne bezieht sich dabei auf duroplastische Kunststoffe, z. B. Epoxidharzsysteme. Nicht ausgeschlossen sein sollen jedoch z. B. auch thermoplastische Kunststoffe.

Die "zweite Lage" der Fließhilfe stellt den erwähnten Auslass für das Harz bereit. Von dem Begriff "Auslass" ist dabei eine einzelne Öffnung oder bevorzugt eine Mehrzahl von Öffnungen umfasst, durch welche das Harz austreten kann, insbesondere bei einem Überdruck (bezogen auf den Druck jenseits des Auslasses, also dem Raum, in welchem das zu infiltrierende Fasermaterial sich befindet).

In einer Ausführungsform ist der Auslass der zweiten Lage durch eine Perforation in der zweiten Lage und/oder eine materialbedingte Harzdurchlässigkeit der zweiten Lage bereitgestellt.

Bevorzugt umfasst der Auslass eine Vielzahl von in der zweiten Lage derart eingebrachten Öffnungen (Perforation), dass das Harz lokal an vielen Stellen in das Fasermaterial gedrückt werden kann, ohne längere Wege durch das Fasermaterial fließen zu müssen.

Die beiden genannten Lagen der Fließhilfe können beispielsweise aus einem Folienmaterial und/oder einem Textilmaterial gebildet sein. In einer Ausführungsform ist die erste Lage aus einem Folienmaterial (bevorzugt aus Kunststoff) und die zweite Lage aus einem Textilmaterial gebildet. Alternativ kann auch die zweite Lage z. B. aus einem Folienmaterial gebildet sein, welches jedoch z. B. geeignet perforiert ist.

In einer Ausführungsform umfasst die erfindungsgemäße Vorrichtung ferner Harzzufuhrmittel zur Zufuhr von Harz in den Fließraum der Fließhilfe. Derartige Harzzufuhrmittel können z. B. einen oder mehrere Kanäle im Bereich der mindestens zwei Werkzeugteile umfassen, durch welche hindurch Harz in die Fließhilfe einfließen gelassen werden kann (z. B. über einen Schlauch, der eine kavitätsseitige Mündung eines solchen Kanals mit dem Innenraum (Fließraum) der Fließhilfe verbindet.

Alternativ zu einer derartigen Zufuhr von Harz über Harzzufuhrmittel der Vorrichtung ist es im Rahmen der Erfindung auch möglich, eine bereits zuvor mit Harz gefüllte Fließhilfe zusammen mit dem Fasermaterial in der Kavität des Formwerkzeuges anzuordnen. In diesem Fall kann sich bei eingelegter (und bereits befüllter) Fließhilfe ein nachfolgendes Zuführen von Harz in den Fließraum der Fließhilfe erübrigen.

Die zweite Lage der Fließhilfe kann z. B. vorteilhaft trennende Eigenschaften bezüglich des verwendeten Harzes besitzen (z. B. durch entsprechende Oberflächenbehandlung oder -beschichtung), um nach Abschluss des Infiltrationsvorganges bzw. der Herstellung des Faserverbundbauteils (durch z. B. thermische Aushärtung des infiltrierten Fasermaterials) die Fließhilfe wieder leicht vom ausgehärteten Fasermaterial trennen zu können.

In einer Ausführungsform der Erfindung wird eine zwischen der Fließhilfe und dem Fasermaterial eingelegte perforierte Trennfolie und/oder ein so genanntes Abreißgewebe eingesetzt.

Alternativ ist es im Rahmen der Erfindung jedoch auch möglich, die Fließhilfe nach Abschluss des Infiltrationsvorganges am bzw. im fertigen Faserverbundbauteil zu belassen. Denkbar ist hierbei z. B. die Verwendung eines Materials für die beiden Lagen, welches vom verwendeten Harz angelöst wird, bzw. sich in diesem Harz auflöst, z. B. um eine gezielte Modifikation der Harzeigenschaften an der betreffenden Bauteilgrenzfläche bzw. -oberfläche zu bewirken.

Die zweite Lage der Fließhilfe, welche dem Fasermaterial zugewandt ist, kann so beschaffen sein, dass sie bei kleineren Druckdifferenzen (z. B. bis etwa 1 bar) nicht für das Matrixmaterial durchlässig ist, sondern erst bei Überschreiten eines bestimmten Differenzdruckes (z. B. 2 bar) durchlässig wird (z. B. aufgrund einer mikroporösen Materialstruktur der zweiten Lage). Alternativ oder zusätzlich kann eine Durchlässigkeit bzw. nennenswert erhöhte Durchlässigkeit auch durch Überschreiten einer bestimmten Temperatur des Harzes geschaffen werden (d. h. bei Unterschreiten einer bestimmten (temperaturabhängigen) Viskosität des Harzes).

Eine weitere Möglichkeit, um in der Verwendungssituation im Verlauf des Herstellungsverfahrens eine Durchlässigkeit der zweiten Lage für das Harz zu schaffen, besteht darin, diese zweite Lage so auszubilden, dass bei Überschreiten einer bestimmten Temperatur (sei es z. B. durch die Zufuhr von Harz oder z. B. durch eine hierfür vorgesehene Aufheizung des Werkzeuges) Bereiche der zweiten Lage schmelzen.

In einer Ausführungsform umfasst die Vorrichtung ferner Luftabfuhrmittel zur Abfuhr von Luft aus der Kavität. Auch diese Luftabfuhrmittel können z. B. Kanäle umfassen, die im Bereich der mindestens zwei Werkzeugteile (durch wenigstens eines davon durchgehend) ausgebildet sind.

In diesem Zusammenhang ist eine Ausgestaltung des Formwerkzeuges von Vorteil, bei welcher die Kavität luftdicht verschließbar ist, insbesondere so, dass diese Luftdichtigkeit sowohl in der ersten Werkzeugstellung als auch der zweiten Werkzeugstellung, und während einer Verstellung zwischen diesen beiden Werkzeugstellungen aufrechterhaltbar ist. Zu diesem Zweck kann beispielsweise eine am Rand zweier Werkzeugteile umlaufend in einem Spalt dieser Werkzeugteile eingelegte komprimierbare Dichtung vorgesehen sein, welche sich bei einer Bewegung der beiden Werkzeugteile aufeinander zu oder voneinander weg entsprechend komprimiert bzw. ausdehnt und hierbei eine luftdichte Abdichtung des Randspaltes zwischen den Werkzeugteilen gewährleistet. Alternativ oder zusätzlich können relativ zueinander bewegbare Werkzeugteile auch durch direkten Kontakt zueinander abgedichtet sein.

Die beiden Lagen der Fließhilfe können in ihrem Randbereich auf vielfältige Art miteinander verbunden sein. Bevorzugt sind die Lagen in dem Randbereich verschweißt, verklebt oder vernäht, wobei auch eine Kombination dieser Verbindungsarten vorgesehen sein kann. Der Randbereich weist also bevorzugt eine Schweißnaht, eine Klebenaht und/oder eine genähte Verbindung auf. Diese Verbindung ist bevorzugt umlaufend vorgesehen, wobei jedoch an mindestens einer Stelle dieses Verlaufes auch eine Unterbrechung vorgesehen sein kann, um den Einlass zur Zufuhr von Harz in den Fließraum an dieser Stelle auszubilden bzw. hindurch verlaufen zu lassen.

Gemäß einer Ausführungsform ist vorgesehen, dass die beiden Lagen der Fließhilfe bereits bei der Herstellung der Fließhilfe miteinander verbunden (z. B. verschweißt) wurden.

Abweichend davon könnte die Fließhilfe jedoch auch separate Lagen (z. B. Folien) aufweisen, die in das betreffende Formwerkzeug eingelegt und erst dort miteinander verbunden werden, beispielsweise lateral außerhalb des Fasermaterialrandes gemeinsam zu einem lateralen Rand des Werkzeuges hin verlaufen und dort miteinander verbunden werden (z. B. verklebt oder mittels einer umlaufenden Dichtung aneinander und an eine Werkzeugteilfläche angedrückt werden). In diesem Fall würde ein "miteinander Verbinden der Lagen in einem Randbereich der Fließhilfe" also erst in der Verwendungssituation geschehen.

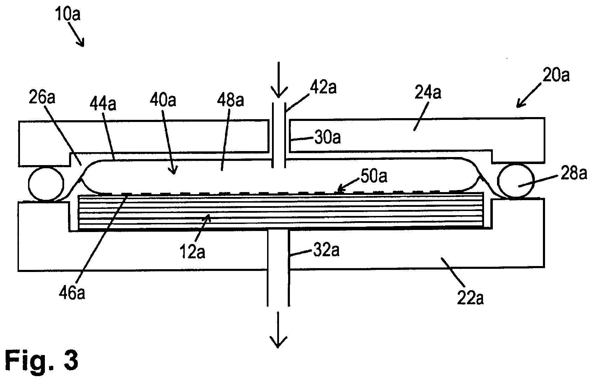

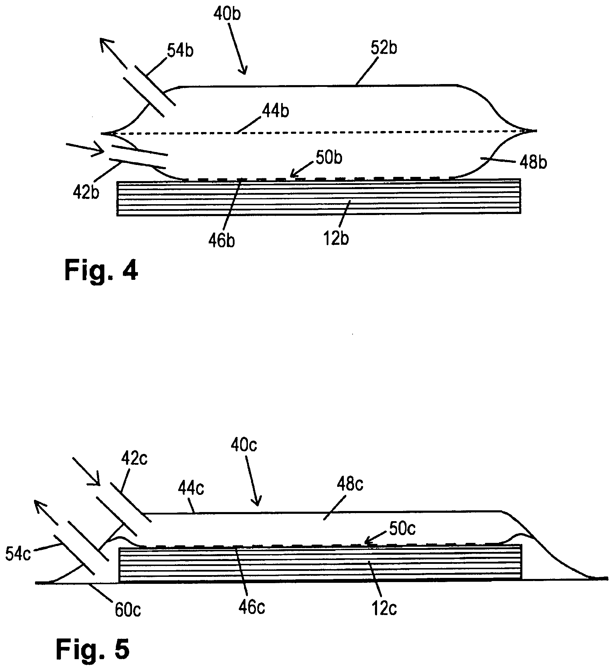

Dass die beiden Lagen "in einem Randbereich der Fließhilfe" miteinander verbunden sind, bedeutet nicht notwendigerweise, dass dieser Randbereich gleichzeitig einen Randbereich der beiden Lagen darstellt. Vielmehr kann sich wenigstens eine der Lagen auch über den genannten "Randbereich der Fließhilfe" hinaus erstrecken (vgl. z. B. die unten noch beschriebenen Beispiele gemäß der Fig. 3 und 5).

In einer Ausführungsform ist vorgesehen, dass die erste Lage der Fließhilfe harzdicht, jedoch luftdurchlässig ist und die Fließhilfe ferner eine dritte Lage umfasst, die harzdicht und luftdicht ist und auf der von der zweiten Lage abgewandten Seite der ersten Lage angeordnet und im Randbereich der Fließhilfe mit der ersten Lage verbunden ist. Wenn bei diesem Aufbau durch geeignete Mittel Luft aus dem Zwischenraum zwischen der ersten und dritten Lage abgesaugt wird, so kann aufgrund der Luftdurchlässigkeit der ersten Lage vorteilhaft der die Fließhilfe umgebende Raum der Kavität über die Fließhilfe evakuiert werden, also insbesondere auch der von dem Fasermaterial eingenommene Raum. Sodann kann über einen in den Fließraum (zwischen erster und zweiter Lage) mündenden Einlass der Fließhilfe Harz eingelassen werden. Dabei unterstützt der zwischen der ersten und dritten Lage herrschende Unterdruck das Entgasen des Fließraumes.

In einer Ausführungsform des erfindungsgemäßen Infiltrationsverfahrens ist vorgesehen, dass zunächst das Fasermaterial und die Fließhilfe in der Kavität des

Formwerkzeuges angeordnet werden, danach mittels Harzzufuhrmitteln der Vorrichtung eine Zufuhr von Harz in den Fließraum der Fließhilfe erfolgt, und schließlich die Kavität durch eine Verstellung des Formwerkzeuges von der ersten Werkzeugstellung in die zweite Werkzeugstellung verkleinert wird, so dass durch diese Verstellung Harz aus dem Fließraum heraus über den von der zweiten Lage bereitgestellten Auslass heraus in das Fasermaterial hinein gedrückt wird. Wie bereits erwähnt ist es jedoch auch möglich, eine bereits mit Harz gefüllte Fließhilfe in der Kavität des Formwerkzeuges anzuordnen, womit der erwähnte Harzzufuhrschritt entbehrlich wird.

In einer Ausführungsform ist vorgesehen, dass nach Verstellung des Werkzeuges in die zweite Werkzeugstellung innerhalb der Kavität im Wesentlichen nurmehr Raum zur Aufnahme des Fasermaterials bereitgestellt wird.

Erfindungsgemäß ist eine Verwendung der beschriebenen Vorrichtung und/oder des beschriebenen Verfahrens zur Herstellung eines plattenförmigen oder schalenförmigen Faserverbundbauteils bevorzugt. Im einfachsten Fall handelt es sich bei einem solchen Faserverbundbauteil um ein ein- oder mehrschichtiges Fasermateriallaminat. Im Rahmen der Erfindung können jedoch auch Faserverbundbauteile hergestellt werden, die aus mehreren Schichten, teils aus Fasermaterial und teils aus einem anderen Material, gebildet werden. Ein Beispiel hierfür können so genannte Sandwichbauteile sein. Bei einem Sandwichbauteil sind wenigstens drei Schichten vorgesehen, die üblicherweise als Kernschicht und (beiderseits des Kerns angeordnete) Deckschichten bezeichnet werden. Bei einem derartigen Aufbau kann die Erfindung z. B. dazu eingesetzt werden, in einem Formwerkzeug diese drei Schichten miteinander zu verbinden und hierbei eine Infiltration der jeweils aus Fasermaterial gebildeten Deckschichten zu bewerkstelligen. Als Kernschicht kann hierbei z. B. insbesondere eine Schaumstoffschicht, bevorzugt geschlossenzellige Schaumstoffschicht vorgesehen sein. Alternativ kann z. B. auch eine so genannte Wabenstruktur (z. B. aus Papier, Pappe, Kunststoffe etc.) vorgesehen sein. In letzterem Fall ist es zweckmäßig, die Wabenstruktur stirnseitig versiegelt einzusetzen (z. B. harzundurchlässige Wabenstruktur-Decklagen), um ein unerwünschtes Volllaufen der Waben mit Harz zu vermeiden.

Mit der Erfindung lassen sich bei der Herstellung von Faserverbundbauteilen insbesondere folgende Vorteile erzielen:
- Schnellere Verteilung des Matrixmaterials (Harz) und Imprägnierung des (z. B. trocken, oder als vorimprägnierte Preform) bereitgestellen Fasermaterials, dadurch kürzere Zykluszeiten und/oder Ermöglichung des Einsatzes höher reaktiver Harzsysteme (z. B. Epoxidharzsysteme, denkbar jedoch auch z. B. thermoplastische Kunststoffe) und/oder höher viskoser (z. B. zähmodifizierter) Matrixsysteme.
- Vermeidung von Faserverschiebungen selbst bei hohen Injektionsdrücken bzw. Volumenströmen des zugeführten Harzes.
- Eine Optimierung des Harzfüllvorganges erfordert vorteilhaft keine oder keine nennenswerten Änderungen an bestehenden Formwerkzeugen (z. B. Position(en) des bzw. der Einspritzpunkte). Vielmehr genügt in der Regel eine Anpassung der Eigenschaften des "Auslasses" der Fließhilfe (z. B. Perforationsmuster), um dadurch kürzere Entwicklungszeiten und geringere Entwicklungskosten zu ermöglichen sowie Bauteil- oder Prozessmodifikationen einfach umzusetzen.
- Je nach Ausführungsform ergibt sich ein reduzierter oder eliminierter Reinigungsaufwand für das Formwerkzeug nach Herstellung eines Faserverbundbauteils.

Die Erfindung wird nachfolgend anhand von Ausführungsbeispielen mit Bezug auf die beigefügten Zeichnungen weiter beschrieben. Es stellen jeweils schematisch dar:
- **Fig. 1**: ein erstes Ausführungsbeispiel einer Vorrichtung und eines Verfahrens zum Infiltrieren von Fasermaterial mit Harz zur Herstellung eines Faserverbundbauteils, in einem ersten Verfahrensstadium ("erste Werkzeugstellung"),
- **Fig. 2**: eine der Fig. 1 entsprechende Darstellung in einem zweiten Verfahrensstadium ("zweite Werkzeugstellung"),
- **Fig. 3**: eine der Fig. 1 entsprechende Darstellung gemäß eines weiteren Ausführungsbeispiels,
- **Fig. 4**: ein Ausführungsbeispiel einer modifiziert gestalteten Fließhilfe (mit dreilagigem Aufbau),
- **Fig. 5**: ein weiteres Ausführungsbeispiel einer Fließhilfe,
- **Fig. 6**: eine Darstellung zur Veranschaulichung einer Infiltration von Fasermaterial bei der Herstellung eines Sandwichbauteils,
- **Fig. 7**: eine der Fig. 6 entsprechende Darstellung gemäß eines modifizierten Ausführungsbeispiels,
- **Fig. 8**: ein weiteres Ausführungsbeispiel einer Fließhilfe, und

- **Fig. 9**: ein weiteres Ausführungsbeispiel einer Fließhilfe.

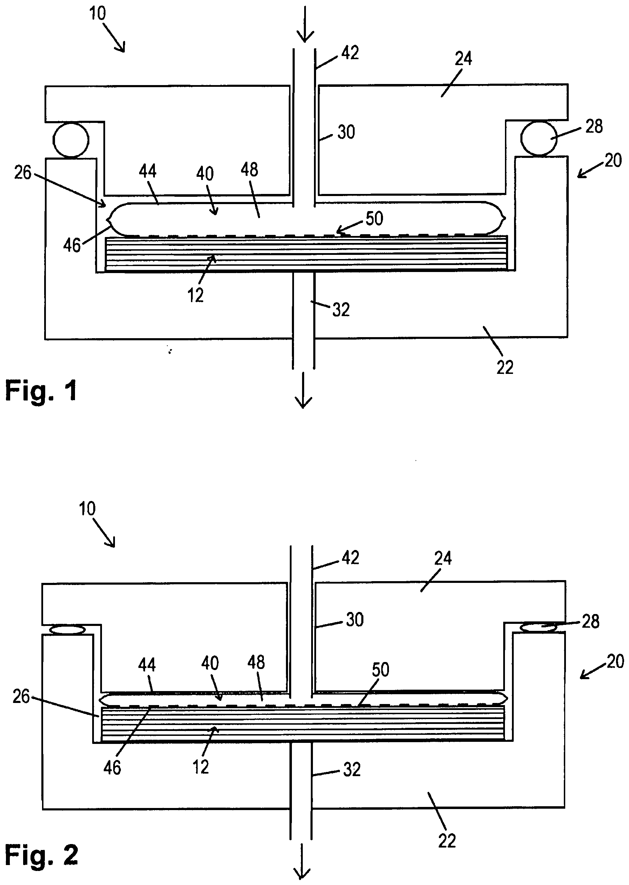

Fig. 1 zeigt ein Ausführungsbeispiel einer Vorrichtung 10 zum Infiltrieren von Fasermaterial 12 mit Harz zur Herstellung eines Faserverbundbauteils (durch Aushärtung des zuvor mit Harz infiltrierten Fasermaterials 12).

Die Vorrichtung 10 umfasst ein mehrteiliges Formwerkzeug 20, im dargestellten Beispiel zweiteilig, mit einer unteren Werkzeughälfte 22 und einer oberen Werkzeughälfte 24.

Diese Werkzeugteile 22, 24 umschließen eine Kavität 26 des Formwerkzeuges 20, in welcher das zu infiltrierende Fasermaterial 12 angeordnet ist.

Im dargestellten Beispiel sorgt eine am seitlichen Rand des Werkzeuges 20 umlaufend wie dargestellt angeordnete Dichtung 28 (z. B. aus Elastomer) für eine luftdichte Abdichtung der Kavität 26 gegenüber der Umgebung.

Des Weiteren umfasst das Werkzeug 20 im dargestellten Beispiel einen durch die obere Werkzeughälfte 24 hindurch verlaufenden Harzzufuhrkanal 30 und einen durch die untere Werkzeughälfte 22 hindurch verlaufenden Luftabfuhrkanal 32.

Der Harzzufuhrkanal 30 ist an einer in der Figur nicht dargestellten ansteuerbaren Harzzufuhrquelle angeschlossen, wohingegen der Luftabfuhrkanal 32 an eine in der Figur nicht dargestellte Vakuumpumpe angeschlossen ist. Die Luftabfuhrpassage bzw. Vakuumpumpe ist hierbei bevorzugt mit einer so genannten Harzfalle ausgestattet.

Das Werkzeug 20 ist für eine Relativverstellung der Werkzeugteile, hier der unteren Werkzeughälfte 22 und der oberen Werkzeughälfte 24 ausgebildet, derart, dass in einer ersten Werkzeugstellung (gemäß Fig. 1) innerhalb der Kavität 26 Raum zur Aufnahme des Fasermaterials 12 und zusätzlicher Raum zur Aufnahme von Harz bzw. Harz in einer "Fließhilfe" 40 bereitgestellt wird, die zusammen mit dem Fasermaterial 12, diesem benachbart (hier: flächig anliegend), in der Kavität 26 angeordnet ist.

Die Kavität 26 kann durch eine Verstellung des Werkzeuges 20 von der ersten Werkzeugstellung (Fig. 1) in eine zweite Werkzeugstellung (Fig. 2) verkleinert werden. Im dargestellten Ausführungsbeispiel wird die Kavität 26 hierbei soweit verkleinert, dass innerhalb der Kavität 26 im Wesentlichen lediglich noch Raum zur Aufnahme des Fasermaterials 12 bereitgestellt wird. Die Imprägnierung des Fasermaterials 12 gemäß des mit den Fig. 1 und 2 veranschaulichten Verfahrens kann z. B. wie folgt erfolgen:
Zunächst wird das trockene Fasermaterial 12 zusammen mit der Fließhilfe 40 in das mehrteilige Formwerkzeug 20 eingelegt, das in der ersten Werkzeugstellung (Fig. 1) bereits vakuumdicht ist, hierbei jedoch in der Kavität 26 mehr Raum zur Verfügung stellt, als es für die Dicke des Fasermaterials 12 bzw. die Soll-Dicke des daraus herzustellenden Bauteils erforderlich wäre.

Die Evakuierung des beschickten Werkzeuges 20 erfolgt in der ersten Werkzeugstellung durch ein Abpumpen von Luft über den Luftabfuhrkanal 32. Außerdem erfolgt ein Einspritzen der erforderlichen Harzmenge über den Harzzufuhrkanal 30, und zwar durch einen durch den Kanal 30 hindurch verlegten (und (nicht dargestellt) zum Kanal 30 hin abgedichteten) Harzzufuhrschlauch 42 der Fließhilfe 40.

Die Fließhilfe 40 umfasst eine erste Lage 44 und eine zweite Lage 46, die in einem Randbereich der insgesamt etwa platten- bzw. kissenförmig formgestalteten Fließhilfe 40 miteinander verbunden sind, um einen Fließraum 48 zu umschließen. Die Form der Fließhilfe 40 ist an die Kontur der der zweiten Lage 46 benachbart angeordneten Oberfläche (Flachseite) des Fasermaterials 12 angepasst. Die erste Lage 44 ist harzdicht und z. B. von einer Kunststofffolie gebildet, wohingegen die zweite Lage 46 einen "Auslass" 50 bereitstellt, durch welchen hindurch Harz aus dem Fließraum 48 heraus in das Fasermaterial 12 (zur Imprägnierung desselben) ausgeleitet werden kann. Die zweite Lage kann z. B. ebenfalls als Kunststofffolie ausgebildet sein, z. B. mit einer geeigneten Perforierung (was in den Fig. 1 und 2 durch eine Strichlierung der zweiten Lage 46 symbolisiert ist).

Das in einem ersten Verfahrensstadium in den Fließraum 48 zugeführte Harz verteilt sich rasch und ungehindert über den gesamten Fließraum bzw. somit über die gesamte Oberfläche des benachbarten Fasermaterials 12, wobei aufgrund einer mehr oder weniger "harzrückhaltenden" Wirkung des Auslassers 50 vermieden wird, dass es auch bei einer schnellen Injektion des Harzmaterials zu unerwünschten Faserverschiebungen im Fasermaterial 12 kommt. Vielmehr erfolgt in diesem Stadium im Wesentlichen oder ausschließlich (je nach Injektionsbedingungen und Gestaltung des Auslasses 50) lediglich eine laterale Durchströmung des Fließraumes 48.

Der Infiltrationsprozess kann z. B. auch so geführt werden, dass die obere Werkzeughälfte 24 aufgrund des im einströmenden Harz herrschenden Drucks angehoben wird, um einen "Fließspalt" zwischen den Werkzeughälften 22, 24 freizugeben.

Anschließend wird die Harzzufuhrpassage z. B. durch ein entsprechendes Ventil geschlossen und das Werkzeug 20 von der ersten Werkzeugstellung (Fig. 1) z. B. hydraulisch, pneumatisch oder elektrisch in eine zweite Werkzeugstellung (Fig. 2) gebracht, in welcher die Kavität 26 verkleinert wird. Im dargestellten Beispiel wird die Kavität 46 so weit verkleinert, dass darin im Wesentlichen nur mehr der Raum zur Aufnahme des Fasermaterials 12 vorhanden ist.

Durch diese Verstellung des Werkzeuges 20 wird das Harz aus dem Fließraum 48 der Fließhilfe 40 heraus, durch den Auslass 50 (Perforationslöcher der zweiten Lage 46) in das Fasermaterial 12 hineingedrückt. Das Fasermaterial 12 wird dabei vollständig in Dickenrichtung mit Harz getränkt.

Spätestens nach Abschluss einer z. B. thermischen bzw. thermisch unterstützten Aushärtung des Harzes im Fasermaterial 12, was zweckmäßigerweise in dem selben Werkzeug 20 bewerkstelligt wird, kann die Luftabsaugung über den Luftabfuhrkanal 32 abgestellt und dann das Werkzeug 20 geöffnet werden, um das fertige Faserverbundbauteil zu entnehmen. Das Abstellen der Luftabsaugung ist oftmals bereits unmittelbar vor oder während der Injektion des Matrixmaterials sinnvoll, um z. B. zu verhindern, dass Matrixmaterial in das Vakuumsystem eindringt.

Die dem Fasermaterial 12 zugewandte Seite der Fließhilfe 40 (zweite Lage 46) kann so beschaffen sein, dass sie bei normalen Umgebungsbedingungen (z. B. Raumtemperatur und max. 1 bar Druckdifferenz) nicht für das Harz durchlässig ist, sondern erst bei Überschreiten eines bestimmten Differenzdruckes und/oder einer bestimmten Temperatur (d. h. Unterschreiten einer gewissen Viskosität des zugeführten Harzmaterials) durchlässig wird. Dies kann durch entsprechende Ausgestaltung des Auslasses 50, also geeignete Dimensionierung und Anordnung von Perforationslöchern und/oder z. B. einer mikroporösen Struktur des verwendeten Lagen- bzw. Folienmaterials eingestellt werden. Ferner kann die Schaffung der Durchlässigkeit durch ein "Schmelzen eines Siegels", z. B. vergleichsweise niedrig schmelzender Bereiche der zweiten Lage 46 realisiert werden.

Abweichend vom dargestellten Ausführungsbeispiel könnte zwischen der Fließhilfe 40 und dem Fasermaterial 12 auch eine perforierte Trennfolie und/oder ein so genanntes Abreißgewebe eingelegt sein, um nach Fertigstellung des Faserverbundbauteils die Fließhilfe 40 leichter wieder von dem Faserverbund trennen zu können.

Alternativ kann die Fließhilfe 40 zumindest an der bei dem Herstellungsprozess dem Fasermaterial 12 zugewandten Seite trennende Eigenschaften aufweisen, z. B. durch eine geeignete Oberflächenbehandlung bzw. Beschichtung der zweiten Lage 46.

Abweichend vom dargestellten Beispiel ist außerdem denkbar, dass die Fließhilfe 40 bzw. deren beiden Lagen 44, 46 aus einem Material bestehen, das vom verwendeten Harz angelöst wird bzw. sich in diesem Harz auflöst, um das Material der Fließhilfe 40 gewissermaßen als oberflächliches Material des fertigen Faserverbundbauteils zu nutzen, etwa um eine Modifikation der Harzeigenschaften an der Bauteiloberfläche zu bewirken.

Bei der nachfolgenden Beschreibung von weiteren Ausführungsbeispielen werden für gleich wirkende Komponenten die gleichen Bezugszahlen verwendet, jeweils ergänzt durch einen kleinen Buchstaben zur Unterscheidung der Ausführungsform. Dabei wird im Wesentlichen nur auf die Unterschiede zu dem bzw. den bereits beschriebenen Ausführungsbeispielen eingegangen und im Übrigen hiermit ausdrücklich auf die Beschreibung vorangegangener Ausführungsbeispiele verwiesen. Jeweils vorteilhafte Besonderheiten der einzelnen Ausführungsbeispiele lassen sich auch miteinander kombinieren.

Fig. 3 ist eine der Fig. 1 entsprechende Darstellung zur Veranschaulichung eines weiteren Ausführungsbeispiels. Abgesehen von der etwas modifizierten Formgestaltung von Werkzeughälften 22a, 24a eines Formwerkzeuges 20a besteht ein weiterer Unterschied gegenüber dem Beispiel gemäß der Fig. 1 und 2 darin, dass bei einer verwendeten Fließhilfe 40a eine der beiden Lagen 44a, 46a, hier z. B. die erste Lage 44a sich über den Randbereich der Fließhilfe, an welchem die beiden Lagen 44a, 46a miteinander verbunden sind, hinaus erstreckt und lateral außerhalb des Randes des Fasermaterials 12a zu der unteren Werkzeughälfte 22a hin luftdicht abgedichtet wird.

Dies besitzt den Vorteil, dass in einem ersten Stadium des Infiltrationsverfahrens durch Absaugen der Luft über einen in diesem Werkzeugteil 22a ausgebildeten Luftabfuhrkanal 32 sich die Fließhilfe 40 an das Fasermaterial 12 anlegt und dieses somit fixiert bzw. kompaktiert. Die obere Werkzeughälfte 24a kann in diesem Stadium in einem gewissen Abstand über dem Aufbau angeordnet sein (erste Werkzeugstellung), so dass für die nachfolgende Harzinjektion in die Fließhilfe 40a hinein auch in Betracht kommt, diese Injektion nicht wie in Fig. 3 symbolisiert über einen Harzzufuhrkanal 30 der oberen Werkzeughälfte 24a bzw. einen dort hindurch verlaufenden Harzzufuhrschlauch 42a zu bewerkstelligen, sondern über einen durch einen "Injektionsspalt" zwischen den Werkzeugteilen 22a, 24a hindurchverlegten Harzzufuhrschlauch 42a (nicht dargestellt).

Durch das Einspritzen von Harz in den Fließraum 48a der Fließhilfe 40a hebt sich die obere (erste) Lage der Fließhilfe 40a, bis diese an der oberen Werkzeughälfte 24a anliegt. Das Harz verteilt sich wieder rasch im Fließraum 48, ohne sogleich unerwünschte Faserverschiebungen im Fasermaterial 12 zu bewirken.

Anschließend wird das Werkzeug 20a von der ersten Werkzeugstellung (Fig. 3) in eine zweite Werkzeugstellung mit verkleinerter Kavität 26 verstellt, um das Harz aus der Fließhilfe 40a vertikal in das Fasermaterial 12 hineinzudrücken. Während das Verfahren gemäß der Fig. 1 und 2 als modifiziertes Spritzpressen (RTM-Verfahren) bezeichnet werden kann, weist das Verfahren gemäß Fig. 3 durch die Nutzung der ersten Lage 44a auch als so genannte "Vakuumfolie" Eigenschaften eines so genannten Vakuum-Infusions-Verfahrens auf.

Abweichend vom Beispiel gemäß Fig. 3, bei welchem eine in dem Sinne vorgefertigte Fließhilfe 40a verwendet wird, als deren Lagen 44a, 46a bereits bei der Herstellung der Fließhilfe 40a miteinander verbunden wurden, könnten auch zwei separate Lagen (z. B. Folien) in das Werkzeug 20a eingelegt und lateral außerhalb des Fasermaterialrandes gemeinsam zum Werkzeug 20a hin abgedichtet werden. In diesem Fall würde das "Miteinanderverbinden der Lagen in einem Randbereich der Fließhilfe" also erst in der Verwendungssituation geschehen. Bei dem Beispiel gemäß Fig. 3 könnten also z. B. zwei derartige separate Lagen 44a, 46a beide bis an den Rand der unteren Werkzeughälfte 22a geführt und dort luftdicht abgedichtet werden. Dies beispielsweise wieder unter Verwendung einer Dichtung 28a wie in Fig. 3 dargestellt, oder z. B. durch eine temporäre Verklebung der beiden Lagen 44a, 46a miteinander und mit dem Rand der Werkzeug hälfte 22a.

Fig. 4 zeigt ein weiteres Ausführungsbeispiel einer bei den hier beschriebenen Vorrichtungen bzw. Verfahren einsetzbaren Fließhilfe 40b, die dreilagig aufgebaut ist, nämlich aus einer harzdichten ersten Lage 44b, einer einen Auslass 50b bereitstellenden zweiten Lage 46b und zusätzlich einer dritten harzdichten und luftdichten Lage 52b, die über der ersten Lage 44b angeordnet und am Rand mit dieser verbunden ist. Für die nachfolgende beschriebene Funktionsweise der Fließhilfe 40b ist ferner noch wesentlich, dass die erste Lage 44b zwar harzdicht, jedoch luftdurchlässig ist. Im Gesamtaufbau bildet die erste Lage 44b somit gewissermaßen eine den Innenraum der Fließhilfe 40b in zwei Kammern aufteilende "semipermiable Membran" (harzundurchlässig, luftdurchlässig). Die Fließhilfe 40b umfasst dann zwei Kammern, nämlich eine in Fig. 4 untere, "harzführende" und dem Fasermaterial 12b zugewandte Kammer und eine darüber, in Fig. 4 oben angeordnete, nachfolgend als "Vakuumkammer" bezeichnete Kammer.

Die harzführende Kammer verfügt (wie bei den zuvor bereits beschriebenen Beispielen) über mindestens einen Harzzufuhranschluss bzw. z. B. Harzzufuhrschlauch 42b. Die Vakuumkammer verfügt ebenfalls über mindestens einen Anschluss, hier einen Luftabfuhrschlauch 54b.

Die Imprägnierung des Fasermaterials 12b unter Einsatz der Fließhilfe 40b kann wie folgt durchgeführt werden:
Nachdem das Fasermaterial 12b mit der darüber angeordneten Fließhilfe 40b in das betreffende Formwerkzeug (in Fig. 4 nicht dargestellt) eingelegt wurde, wird über den Luftabfuhrschlauch 54b die Vakuumkammer evakuiert. Durch die "semipermiable Membran" (erste Lage 44b) und die darunter liegende, dem Fasermaterial 12b zugewandte bzw. auf diesem aufliegende, den Auslass 50b (z. B. Perforation) bereitstellende zweite Lage 46b wird somit auch das noch trockene Fasermaterial 12b im betreffenden Raum der Werkzeugkavität evakuiert. Dies gelingt z. B. sowohl bei einem Einsatz in einem Werkzeug 20 gemäß der Fig. 1 und 2 als auch bei Einsatz in einem Werkzeug 20a gemäß Fig. 3 (bei entsprechender Modifikation der Fließhilfe 40b). Insbesondere kann somit die Fließhilfe 40b auch so wie für eine Modifikation des Beispiels gemäß Fig. 3 bereits beschrieben eingesetzt werden, nämlich mit einer Abdichtung der drei Lagen 44b, 46b, 52b miteinander und zur unteren Werkzeug hälfte hin, um das Evakuieren des Fasermaterials 12b gegebenenfalls auch bei noch geöffneten Werkzeug durchführen zu können.

Sodann wird über den Harzzufuhrschlauch 42b der harzführenden Kammer die erforderliche Menge an Harz in den Fließraum 48b der Fließhilfe 40b zugeführt. Dabei kann ein in der Vakuumkammer weiterhin anliegendes Vakuum das Entgasen des unterhalb der Membran (erste Lage 44b) vorbeiströmenden Harzes unterstützen.

Sobald ausreichend Harz injiziert wurde, wird das verwendete Formwerkzeug geschlossen (Verstellung von der ersten zur zweiten Werkzeugstellung). Dadurch wird das in der harzführenden Kammer befindliche Harzmaterial durch den Auslass 50b der zweiten Lage 46b aus der Fließhilfe 40b heraus in das Fasermaterial 12b hinein gepresst. Die semipermiable Membran 44b sperrt hierbei für das Harz und es dringt (im Idealfall) kein Harz in die Vakuumkammer ein.

Fig. 5 zeigt ein weiteres Ausführungsbeispiel einer im Rahmen der Erfindung einsetzbaren Fließhilfe 40c, umfassend wieder eine harzdichte erste Lage 44c und eine einen Auslass 50c bereitstellende zweite Lage 46c.

Abweichend von den bisher beschriebenen Ausführungsbeispielen ist eine weitere Lage 60c wie in Fig. 5 dargestellt derart an der Fließhilfe 40c angebunden, dass damit ein Fasermaterial 12c an der Fließhilfe 40c angebunden wird, und zwar in einer Kammer, welche zwischen der zweiten Lage 46c und der weiteren Lage 60c gebildet bzw. von diesen beiden Lagen 46c, 60c umschlossen wird. Ein Randbereich der weiteren Lage 60c ist hierfür umlaufend z. B. mit einem über den Rand der Fließhilfe 40c lateral überstehenden Abschnitt der ersten Lage 44c verbunden.

Bei dieser Ausführung kann ein in einer Folie versiegeltes Fasermaterial (z. B. Preform) 12 eingesetzt werden, wobei das Fasermaterial 12 passend konfektioniert bereits zusammen mit der Fließhilfe 40c bereitgestellt wird. Die in Fig. 5 "obere Kammer" (zwischen den Lagen 44c und 46c) bildet einen Fließraum 48c und ist mit einem Harzzufuhranschluss bzw. Harzzufuhrschlauch 42c versehen, wohingegen die in Fig. 5 "untere Kammer" (zwischen den Lagen 46c und 60c) mit einem Luftabfuhranschluss bzw. Luftabfuhrschlauch 54c versehen ist. Die genannten Anschlüsse sind jeweils bevorzugt verschließbar ausgestaltet.

Zur Vorbereitung der Faserverbundherstellung kann der in Fig. 5 dargestellte Aufbau gewünschtenfalls somit mit vorvakuumiertem Fasermaterial 12c und/oder mit bereits vorgesehener Harzfüllung (der "oberen Kammer") bereitgestellt werden, und bei Bedarf mit einem Formwerkzeug der bereits beschriebenen Art weiterverarbeitet werden. Alternativ kann das Vakuumieren und/oder die Harzzufuhr in den Fließraum 48c der Fließhilfe 40c auch erst im Werkzeug erfolgen, z. B. wie ebenfalls bereits für die vorangegangenen Beispiele beschrieben.

Beim Schließen des Werkzeuges wird dann aufgrund des Druckaufbaus in Dickenrichtung eine Fließfähigkeit durch die Lage 46c hindurch erzeugt und das Harz somit in das Fasermaterial 12c hineingedrückt.

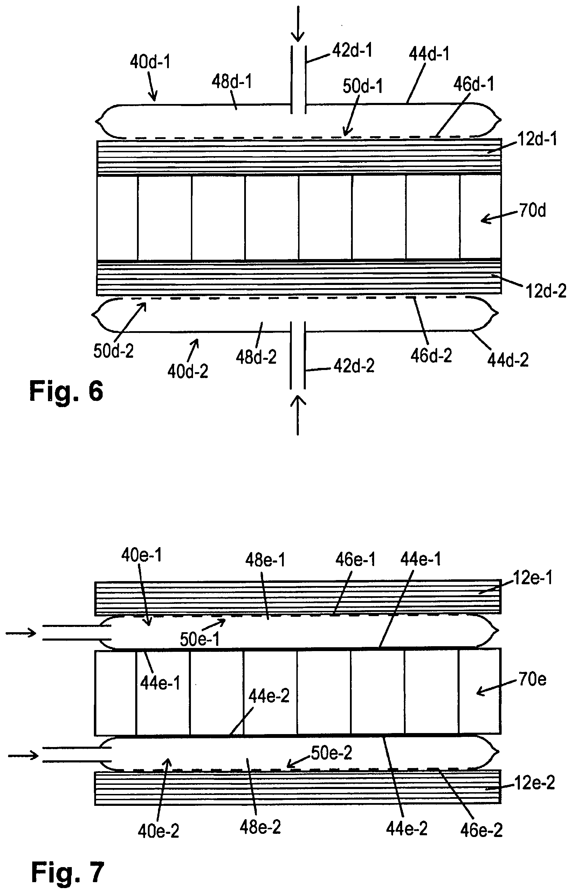

Die erfindungsgemäße Vorrichtung bzw. das erfindungsgemäße Verfahren können besonders vorteilhaft z. B. zur Herstellung eines plattenförmigen oder schalenförmigen Faserverbundbauteils verwendet werden, wie bereits mit den vorangegangenen Ausführungsbeispielen veranschaulicht. Insbesondere kann die Erfindung auch zur Herstellung von so genannten Sandwichbauteilen eingesetzt werden, bei welchen z. B. die zwei Sandwich-Deckschichten als Faserverbund und ein dazwischen angeordneter Sandwich-Kern aus einem wahlweise auch anderen Material (z. B. Schaumstoff oder z. B. wabenförmige formgestaltete Struktur aus Papier, Kunststoff etc.) ausgebildet sein kann. Nachfolgend werden mit Bezug auf die Fig. 6 und 7 zwei beispielhafte Herstellungsverfahren für derartige Sandwichbauteile beschrieben.

Fig. 6 zeigt einen zur Herstellung eines Sandwichbauteils vorgesehenen Aufbau aus einem Wabenkern 70d und zwei daran anzubindenden Deckschichten in Form eines ersten Fasermaterials 12d-1 und eines zweiten Fasermaterials 12d-2. Die Fasermaterialien 12d-1 und 12d-2, nachfolgend einzeln oder zusammen auch als "Fasermaterial 12d" bezeichnet, werden zunächst im noch trockenen Zustand zusammen mit zwei wie in Fig. 6 dargestellt angeordneten Fließhilfen 40d-1 und 40d-2 in das betreffende Formwerkzeug (nicht dargestellt) eingelegt.

Die Fließhilfen 40d-1, 40d-2 besitzen in diesem Beispiel denselben Aufbau und dieselbe Funktion wie z. B. die bereits im Zusammenhang mit den Beispielen gemäß der Fig. 1 bis 3 beschriebenen Fließhilfen.

Die Herstellung des Sandwichbauteils durch Infiltrieren der Fasermaterialien 12d unter Einsatz der Fließhilfen 40d erfolgt im Prinzip genauso wie bereits bei den Beispielen gemäß der Fig. 1 bis 3 beschrieben, so dass sich hier eine detaillierte Erläuterung erübrigt. Es sei lediglich angemerkt, dass aufgrund der "doppelten Anordnung" von Fasermaterialen 12d und Fließhilfen 40d in der "ersten Werkzeugstellung" zusätzlicher Raum für zwei harzgefüllte Fließhilfen in der Kavität des Werkzeuges bereitgestellt werden muss und die Zufuhr von Harz ebenfalls doppelt ausgeführt sein muss. Bei Verwendung eines Werkzeuges der in den Fig. 1 bis 3 dargestellten Art könnte hierfür z. B. die jeweils untere Werkzeughälfte mit einem weiteren Harzzufuhrkanal (zum Durchtritt des weiteren Harzzufuhrschlauches der zweiten Fließhilfe 40d-2) versehen werden. Außerdem könnte ein Luftabfuhrkanal des Werkzeuges in diesem Fall zweckmäßigerweise z. B. in lateraler Richtung aus der Kavität heraus (durch wenigstens eines der Werkzeugteile) verlaufen.

Bei dem in Fig. 6 gezeigten Beispiel ist vorgesehen, dass nach der Verstellung des Werkzeuges in dessen "zweite Werkzeugstellung", und nachfolgender Aushärtung des Harzes in den Fasermaterialen 12d die Fließhilfen 40d wieder vom fertigen Bauteil getrennt (und z. B. entsorgt oder wiederverwendet) werden. Ein in dieser Hinsicht anderes Beispiel veranschaulicht Fig. 7.

Fig. 7 zeigt einen dem Beispiel gemäß Fig. 6 ähnlichen Aufbau zur Herstellung eines Faserverbund-Sandwichbauteils, wobei abweichend vom Beispiel gemäß Fig. 6 zwei Fließhilfen 40e-1 und 40e-2 nicht als äußerste Schichten des in das Formwerkzeug einzubringenden Konstruktes vorgesehen sind und nach erfolgter Bauteilherstellung vom Bauteil wieder getrennt werden, sondern wie in Fig. 7 dargestellt jeweils zwischen einem der Faserverbundmaterialien 12e-1, 12e-2 und dem Kern 70e des Sandwichaufbaus zwischengefügt werden, so dass diese Fließhilfen 40e nach Fertigstellung des Sandwichbauteils als integrale Komponenten in dem fertigen Bauteil verbleiben.

Dies kann unter Umständen z. B. von Vorteil sein, wenn durch entsprechende Wahl des Materials der Fließhilfen 40e damit eine entsprechende Modifikation der Grenzflächen zwischen dem Kern 70e und den Deckschichten 12e im fertigen Bauteil erzielt werden soll. Wenn das Material bzw. die Materialien der Fließhilfen 40e-1 und 40e-2 sich im Harz auflösen, so kann damit z. B. eine geeignete Modifikation der Eigenschaften der Anbindung der Sandwich-Decklagen an den Sandwich-Kern bewirkt werden.

Bei dem Beispiel gemäß Fig. 7 kann auch vorgesehen sein, dass die Fließhilfen 40e-1, 40e-2 jeweils beidseitig Auslässe zum Ausleiten von Harz aus den jeweiligen Fließräumen 48e-1 bzw. 48e-2 bereitstellen, um sowohl die Sandwich-Decklagen (Fasermaterialien 12e-1 und 12e-2) als auch, zumindest teilweise, den Sandwich-Kern (z. B. bei Ausbildung aus Papier oder dergleichen) zu infiltrieren oder zu benetzen.

Insbesondere z. B. bei Verwendung von offenzelligen oder offenporigen Materialien für den Sandwich-Kern 70e kann es aber auch vorteilhaft sein, wenn die dem Kern 70e benachbarten ersten Lagen 44e-1, 44e-2 keinen Auslass zum Ausleiten von Harz in den Kern 70e bereitstellen, sondern vielmehr auf ihren dem Kern 70e zugewandten Seiten mit einem Klebstoff, insbesondere z. B. vernetzenden Klebstoff beschichtet sind, um damit die Anbindung an den Kern 70e zu bewerkstelligen.

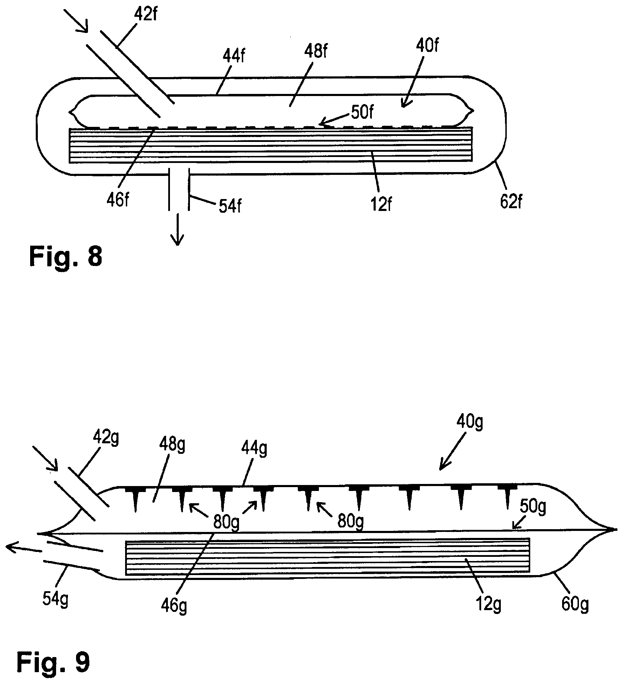

Fig. 8 zeigt nochmals ein weiteres Ausführungsbeispiel, bei welchem ähnlich dem Beispiel gemäß Fig. 5 ein Konstrukt in das betreffende Formwerkzeug eingebracht wird oder in dem betreffenden Formwerkzeug geschaffen (aufgebaut) wird, welches ein Fasermaterial 12f bereits mit einer zugeordneten Fließhilfe 40f verbunden aufweist.

Die Fließhilfe 40f, sei sie leer oder bereits mit Harz gefüllt (über einen Harzzufuhrschlauch 42f) ist im dargestellten Beispiel zusammen mit dem Fasermaterial 12f von einem Folienbeutel 62f umschlossen, der mit einem Luftabfuhrschlauch 54f versehen ist.

Der Einsatz des in Fig. 8 dargestellten kombinierten Fließhilfe-Fasermaterial-Aufbaus im Rahmen der Erfindung kann dann analog dem für das Beispiel gemäß Fig. 5 bereits beschriebenen Einsatz erfolgen.

Fig. 9 zeigt ein noch weiteres Beispiel eines kombinierten Fließhilfe-Fasermaterial-Aufbaus, ähnlich dem in Fig. 5 gezeigten Aufbau.

Der Unterschied zum Beispiel gemäß Fig. 5 besteht darin, dass eine zweite Lage 46g einer Fließhilfe 40g anfänglich noch nicht durchlässig für Harz ist, sondern erst später (im Formwerkzeug) mittels innerhalb eines Fließraumes 48g vorgesehenen Perforationsorganen, hier Perforationsstacheln 80g, perforiert wird. Die Bereitstellung eines Auslasses zum Ausleiten von Harz aus dem Fließraum 48g heraus in das Fasermaterial 12g hinein erfolgt also durch die zweite Lage 46g in Zusammenwirkung mit den Perforationsstacheln 80g.

Der Einsatz des in Fig. 9 gezeigten kombinierten Fließhilfe-Fasermaterial-Aufbaus erfolgt ähnlich wie bei dem Beispiel gemäß Fig. 5, wobei beim Verstellen des betreffenden Werkzeuges aus der ersten Werkzeugstellung in die zweite Werkzeugstellung die Perforationsstacheln 80g mit ihren Spitzen die zweite Lage 46g perforieren, so dass das Harz in das Fasermaterial 12g geleitet wird.

In einer Weiterbildung des Infiltrationsverfahrens unter Einsatz des in Fig. 9 gezeigten Aufbaus erfolgt die erwähnte Werkzeugverstellung zunächst ein Mal oder mehrere Male ohne Harzfüllung des Fließraumes 48g, um die Perforation auszubilden, und erst danach die Zufuhr von Harz über einen Harzzufuhrschlauch 42g in den Fließraum 48g und schließlich eine weitere Werkzeugverstellung von der ersten in die zweite Werkzeugstellung.

Mit den oben beschriebenen Ausführungsbeispielen sind vorteilhafte Vorrichtungen und Verfahren zur Herstellung von Faserverbundbauteilen in einem durch Einsatz einer besonderen Fließhilfe modifizierten RTM-Verfahren (d. h. in einem geschlossenen Werkzeug) bereitgestellt. Die Verteilung des Matrixmaterials (Harz) und die Imprägnierung des Fasermaterials können vorteilhaft besonders rasch durchgeführt werden. Die Gefahr von unerwünschten Faserverschiebungen auch bei hohen Injektionsdrücken bzw. Volumenströmen des zugeführten Matrixmaterials ist hierbei erheblich verringert.

## Patentansprüche

1. Vorrichtung zum Infiltrieren von Fasermaterial (12) mit Harz zur Herstellung eines Faserverbundbauteils, umfassend ein Formwerkzeug (20) mit einer von mindestens zwei Werkzeugteilen (22, 24) umschlossenen Kavität (26),
wobei das Formwerkzeug (20) für eine Relativverstellung der mindestens zwei Werkzeugteile (22, 24) ausgebildet ist, derart, dass in einer ersten Werkzeugstellung innerhalb der Kavität (26) Raum zur Aufnahme des Fasermaterials (12) und zusätzlicher Raum zur Aufnahme von Harz bereitstellbar ist und die Kavität (26) durch eine Verstellung des Formwerkzeuges (20) von der ersten Werkzeugstellung in eine zweite Werkzeugstellung verkleinerbar ist,
**dadurch gekennzeichnet, dass** in der Kavität (26) eine Fließhilfe (40) vorgesehen ist, umfassend zumindest eine erste Lage (44) und eine zweite Lage (46), die in einem Randbereich der Fließhilfe (40) miteinander verbunden sind, um einen Fließraum (48) zu umschließen, wobei die erste Lage (44) harzdicht ist, wohingegen die zweite Lage (46) einen Auslass (50) zum Ausleiten von Harz aus dem Fließraum (48) heraus in das Fasermaterial (12) hinein bereitstellt, und wobei der Fließraum (48) der Fließhilfe (40) mit Harz gefüllt ist und/oder die Fließhilfe (40) einen Einlass (42) zur Zufuhr von Harz in den Fließraum (48) aufweist.

2. Vorrichtung nach Anspruch 1, wobei der Auslass (50) der zweiten Lage (46) durch eine Perforation in der zweiten Lage (46) und/oder eine materialbedingte Harzdurchlässigkeit der zweiten Lage (46) bereitgestellt ist.

3. Vorrichtung nach einem der vorangehenden Ansprüche, ferner umfassend Harzzufuhrmittel (30, 42) zur Zufuhr von Harz in den Fließraum (48) der Fließhilfe (40).

4. Vorrichtung nach einem der vorangehenden Ansprüche, ferner umfassend Luftabfuhrmittel (32, 54) zur Abfuhr von Luft aus der Kavität (26).

5. Vorrichtung nach einem der vorangehenden Ansprüche, wobei die erste Lage (44) der Fließhilfe (40) harzdicht, jedoch luftdurchlässig ist und die Fließhilfe (40) ferner eine dritte Lage (52) umfasst, die harzdicht und luftdicht ist und auf der von der zweiten Lage (46) abgewandten Seite der ersten Lage (44) angeordnet und im Randbereich der Fließhilfe (40) mit der ersten Lage (44) verbunden ist.

6. Verfahren zum Infiltrieren von Fasermaterial (12) mit Harz zur Herstellung eines Faserverbundbauteils, umfassend:
- Anordnen des Fasermaterials (12) in einer Kavität (26) eines Formwerkzeuges (20), bei welchem die Kavität (26) von mindestens zwei, relativ zueinander verstellbaren Werkzeugteilen (22, 24) umschlossen wird,
- Verstellen des Formwerkzeuges (20) von einer ersten Werkzeugstellung, in welcher innerhalb der Kavität (26) Raum zur Aufnahme des Fasermaterials (12) und zusätzlicher Raum bereitgestellt wird, in eine zweite Werkzeugstellung, in welcher die Kavität (26) verkleinert ist, so dass bei dieser Verstellung Harz aus dem zusätzlichen Raum heraus in das Fasermaterial (12) hinein gedrückt wird,
**dadurch gekennzeichnet, dass** das Verfahren ferner umfasst:
- Anordnen einer Fließhilfe (40) in dem zusätzlichen Raum der Kavität (26), wobei die Fließhilfe (40) zumindest eine erste Lage (44) und eine zweite Lage (46) umfasst, die in einem Randbereich der Fließhilfe (40) miteinander verbunden sind, um einen Fließraum (48) der Fließhilfe zu umschließen, wobei die erste Lage (44) harzdicht ist, wohingegen die zweite Lage (46) einen Auslass (50) zum Ausleiten von Harz aus dem Fließraum (48) heraus in das Fasermaterial (12) hinein bereitstellt, und wobei der Fließraum (48) der Fließhilfe (40) mit Harz gefüllt ist und/oder die Fließhilfe (40) einen Einlass (42) zur Zufuhr von Harz in den Fließraum (48) aufweist, und
- gegebenenfalls Zuführen von Harz in den Fließraum (48) der Fließhilfe (40),
so dass bei der Verstellung des Formwerkzeuges (20) von der ersten Werkzeugstellung in die zweite Werkzeugstellung Harz aus dem Fließraum (48) der Fließhilfe (40) heraus in das Fasermaterial (12) hinein gedrückt wird.

7. Verfahren nach Anspruch 6, wobei zunächst das Fasermaterial (12) und die Fließhilfe (40) in der Kavität (26) des Formwerkzeuges (20) angeordnet werden, danach mittels Harzzufuhrmitteln (30, 42) der Vorrichtung (10) eine Zufuhr von Harz in den Fließraum (48) der Fließhilfe (40) erfolgt, und schließlich die Kavität (26) durch eine Verstellung des Formwerkzeuges (20) von der ersten Werkzeugstellung in die zweite Werkzeugstellung verkleinert wird, so dass durch diese Verstellung Harz aus dem Fließraum (48) heraus über den von der zweiten Lage (46) bereitgestellten Auslass (50) heraus in das Fasermaterial (12) hinein gedrückt wird.

8. Verwendung einer Vorrichtung (10) nach einem der Ansprüche 1 bis 5 und/oder eines Verfahrens nach einem der Ansprüche 6 bis 7 zum Infiltrieren von Fasermaterial (12) mit Harz zur Herstellung eines plattenförmigen oder schalenförmigen Faserverbundbauteils.

## Claims

1. Device for infiltrating fibrous material (12) with resin so as to produce a fibre composite component, said device comprising a moulding tool (20) having a cavity (26) that is enclosed by at least two tool parts (22, 24),
wherein the moulding tool (20) is embodied for a relative adjustment of the at least two tool parts (22, 24) in such a manner that in a first tool position space for receiving the fibrous material (12) and additional space for receiving resin can be provided within the cavity (26) and the size of the cavity (26) can be reduced by means of adjusting the moulding tool (20) from the first tool position into a second tool position,
**characterized in that** a flow aid (40) is provided in the cavity (26), said flow aid comprising at least one layer (44) and one second layer (46) that are connected to one another in an edge region of the flow aid (40) in order to enclose a flow space (48), wherein the first layer (44) is impermeable to resin, while the second layer (46) provides an outlet (50) for discharging resin from the flow space (48) into the fibrous material (12), and wherein the flow space (48) of the flow aid (40) is filled with resin and/or the flow aid (40) comprises an inlet (42) for supplying resin into the flow space (48).

2. Device according to Claim 1, wherein the outlet (50) of the second layer (46) is provided by means of a perforation in the second layer (46) and/or by virtue of the material of the second layer (46) itself being permeable to resin.

3. Device according to any one of the preceding claims, moreover comprising resin supplying means (30, 42) so as to supply resin in the flow space (48) of the flow aid (40).

4. Device according to any one of the preceding claims, moreover comprising air discharging means (32, 54) for discharging air from the cavity (26).

5. Device according to any one of the preceding claims, wherein the first layer (44) of the flow aid (40) is impermeable to resin but is permeable to air and the flow aid (40) moreover comprises a third layer (52) that is impermeable to resin and is impermeable to air and is arranged on the side of the first layer (44) that is remote from the second layer (46) and is connected to the first layer (44) in the edge region of the flow aid (40).

6. Method for infiltrating fibrous material (12) with resin so as to produce a fibre composite component, said method comprising:
- arranging the fibrous material (12) in a cavity (26) of a moulding tool (20) in which the cavity (26) is enclosed by at least two tool parts (22, 24) that can be adjusted relative to one another.
- adjusting the moulding tool (20) from a first tool position in which space for receiving the fibrous material (12) and additional space is provided within the cavity (26) into a second tool position in which the size of the cavity (26) is reduced so that during this adjustment procedure resin is pressed out the additional space into the fibrous material (12), **characterized in that** the method moreover comprises:
- arranging a flow aid (40) in the additional space of the cavity (26), wherein the flow aid (40) comprises at least one first layer (44) and one second layer (46) that are connected to one another in an edge region of the flow aid (40) in order to enclose a flow space (48) of the flow aid, wherein the first layer (44) is impermeable to resin, while the second layer (46) provides an outlet (50) for discharging resin from the flow space (48) into the fibrous material (12), and wherein the flow space (48) of the flow aid (40) is filled with resin and/or the flow aid (40) comprises an inlet (42) for supplying resin into the flow space (48), and
- where appropriate supplying resin into the flow space (48) of the flow aid (40),
so that when adjusting the moulding tool (20) from the first tool position into the second tool position resin is pressed out of the flow space (48) of the flow aid (40) into the fibrous material (12).

7. Method according to Claim 6, wherein initially the fibrous material (12) and the flow aid (40) are arranged in the cavity (26) of the moulding tool (20), after which resin is supplied into the flow space (48) of the flow aid (40) by means of resin supplying means (30, 42) of the device (10), and finally the size of the cavity (26) is reduced by means of adjusting the moulding tool (20) from the first tool position into the second tool position so that resin is pushed out of the flow space (48) by way of the outlet (50) that is provided by the second layer (46) into the fibrous material (12).

8. Use of a device (10) according to any one of the claims 1 to 5 and/or a method according to any one of the claims 6 to 7 for infiltrating fibrous material (12) with resin so as to produce a plate-shaped or shell-shaped fibre composite component.

## Revendications

1. Dispositif d'infiltration de matière fibreuse (12) avec de la résine pour la fabrication d'un composant composite renforcé par des fibres, comprenant un moule (20) doté d'une cavité (26) enfermée par au moins deux parties de moule (22, 24),
le moule (20) étant conçu pour un déplacement relatif des au moins deux parties de moule (22, 24) de telle manière que, dans une première position de moule, de l'espace pour recevoir la matière fibreuse (12) et de l'espace supplémentaire pour recevoir de la résine peuvent être obtenus à l'intérieur de la cavité (26) et que la cavité (26) peut être rétrécie par un déplacement du moule (20) de la première position de moule à une seconde position de moule,
**caractérisé en ce qu'**un élément d'aide à l'écoulement (40) est prévu dans la cavité (26), comprenant au moins une première couche (44) et une deuxième couche (46), qui sont reliées l'une à l'autre dans une zone de bord de l'élément d'aide à l'écoulement (40), pour enfermer un espace d'écoulement (48), la première couche (44) étant étanche à la résine, tandis que la deuxième couche (46) fournit une sortie (50) pour guider de la résine hors de l'espace d'écoulement (48) dans la matière fibreuse (12), et l'espace d'écoulement (48) de l'élément d'aide à l'écoulement (40) étant rempli de résine et/ou l'élément d'aide à l'écoulement (40) comportant une entrée (42) pour alimenter de la résine dans l'espace d'écoulement (48).

2. Dispositif selon la revendication 1, dans lequel l'orifice de sortie (50) de la deuxième couche (46) est obtenu par une perforation dans la deuxième couche (46) et/ou une perméabilité à la résine inhérente au matériau de la deuxième couche (46).

3. Dispositif selon l'une des revendications précédentes, comprenant en outre des moyens d'alimentation de résine (30, 42) destinés à alimenter de la résine dans l'espace d'écoulement (48) de l'élément d'aide à l'écoulement (40).

4. Dispositif selon l'une des revendications précédentes, comprenant en outre des moyens d'évacuation de l'air (32, 54) destinés à évacuer de l'air hors de la cavité (26).

5. Dispositif selon l'une des revendications précédentes, dans lequel la première couche (44) de l'élément d'aide à l'écoulement (40) est étanche à la résine, mais perméable à l'air et l'élément d'aide à l'écoulement (40) comprend en outre une troisième couche (52), qui est étanche à la résine et étanche à l'air et qui est disposée sur le côté de la première couche (44) opposé à la deuxième couche (46) et reliée à la première couche (44) dans la zone de bord de l'élément d'aide à l'écoulement (40).

6. Procédé d'infiltration de matière fibreuse (12) avec de la résine pour la fabrication d'un composant composite renforcé par des fibres, comprenant :
- la disposition de la matière fibreuse (12) dans une cavité (26) d'un moule (20), dans lequel la cavité (26) est enfermee par au moins deux parties de moule (22, 24) déplaçables l'une par rapport à l'autre,
- le déplacement du moule (20) d'une première position de moule, dans laquelle de l'espace pour recevoir la matière fibreuse (12) et de l'espace supplémentaire sont obtenus à l'intérieur de la cavité (26), à une seconde position de moule, dans laquelle la cavité (26) est rétrécie, de telle sorte que, lors de ce déplacement, de la résine est poussée hors de l'espace supplémentaire dans la matière fibreuse (12), **caractérisé en ce que** le procédé comprend en outre :
- la disposition d'un élément d'aide à l'écoulement (40) dans l'espace supplémentaire de la cavité (26), l'élément d'aide à l'écoulement (40) comprenant au moins une première couche (44) et une deuxième couche (46), qui sont reliées l'une à l'autre dans une zone de bord de l'élément d'aide à l'écoulement (40), pour enfermer un espace d'écoulement (48) de l'élément d'aide à l'écoulement, la première couche (44) étant étanche à la résine, tandis que la deuxième couche (46) fournit une sortie (50) pour guider de la résine hors de l'espace d'écoulement (48) dans la matière fibreuse (12), et l'espace d'écoulement (48) de l'élément d'aide à l'écoulement (40) étant rempli de résine et/ou l'élément d'aide à l'écoulement (40) comportant une entrée (42) pour alimenter de la résine dans l'espace d'écoulement (48), et
- le cas échéant, l'alimentation de résine dans l'espace d'écoulement (48) de l'élément d'aide à l'écoulement (40),
de telle sorte que, lors du déplacement du moule (20) de la première position de moule à la seconde position de moule, de la résine est poussée hors de l'espace d'écoulement (48) de l'élément d'aide à l'écoulement (40) dans la matière fibreuse (12).

7. Procédé selon la revendication 6, dans lequel la matière fibreuse (12) et l'élément d'aide à l'écoulement (40) sont d'abord disposés dans la cavité (26) du moule (20), puis une alimentation de résine dans l'espace d'écoulement (48) de l'élément d'aide à l'écoulement (40) est effectuée à l'aide de moyens d'alimentation de résine (30, 42) du dispositif (10), et, enfin, la cavité (26) est rétrécie par un déplacement du moule (20) de la première position de moule à la seconde position de moule, de telle sorte que ce déplacement entraîne la poussée de résine hors de l'espace d'écoulement (49) dans la matière fibreuse (12) par le biais de la sortie (50) fournie dans la deuxième couche (46).

8. Utilisation d'un dispositif (10) selon l'une des revendications 1 à 5, et/ou d'un procédé selon l'une des revendications 6 et 7, destinés à l'infiltration de matière fibreuse (12) avec de la résine pour la fabrication d'un composant composite renforcé par des fibres en forme de plaque ou en forme de coque.
